# EUROPÄISCHE PATENTANMELDUNG

(11) **EP 3 249 615 A1**
(43) Veröffentlichungstag der Anmeldung: **29.11.2017**
(21) Anmeldenummer: 16171378.9
(22) Anmeldetag: 25.05.2016
(51) Int. Cl.: G07C 9/00, E01F 13/04, E06B 11/00

(54) **VERFAHREN ZUM AUSLESEN VON ZUGANGSBERECHTIGUNGEN ODER VON IDS AUS ZUMINDEST EINEM KUNDENMEDIUM MITTELS MEHRERER LESEEINRICHTUNGEN EINER ZUGANGSKONTROLLVORRICHTUNG UND ZUR AUSWERTUNG DER AUSGELESENEN IDS ODER ZUGANGSBERECHTIGUNGEN**

(71) Anmelder: SKIDATA AG, 5083 Grödig/Salzburg (AT)
(72) Erfinder: MALMBORG, Anders, 5020 Salzburg (AT); GRASMANN, Thomas, 5082 Grödig (AT); FELLNER, Andreas, 5360 St. Wolfgang (AT)
(74) Vertreter: Karakatsanis, Georgios

(57) **Zusammenfassung**

Im Rahmen des Verfahrens zum Auslesen von Zugangsberechtigungen oder von IDs aus zumindest einem Kundenmedium mittels zumindest einer Leseeinrichtung (3, 4, 5) einer Zugangskontrollvorrichtung (2) und zur Auswertung der ausgelesenen IDs oder Zugangsberechtigungen, werden sämtliche Leseeinrichtungen (3, 4, 5) aktiviert und führen parallel einen Scan für IDs oder Zugangsberechtigungen durch, wobei die ausgelesenen IDs oder Zugangsberechtigungen an eine Steuerung der Zugangskontrollvorrichtung (2) übermittelt werden, welche diese an eine Auswerteeinheit (1) übermittelt, während die Leseeinrichtungen (3, 4, 5) weiterhin nach möglichen IDs oder Zugangsberechtigungen scannen, wobei, wenn eine Auswertung ergibt, dass eine ausgelesene Zugangsberechtigung gültig ist oder einer ausgelesenen ID eine gültige Zugangsberechtigung zugeordnet ist, die Leseeinrichtungen (3, 4, 5) deaktiviert werden und der Zugang durch Betätigung eines Sperrorgans (6) der Zugangskontrollvorrichtung gewährt wird und wobei, wenn nach einer vorgegebenen Zeit seit der Aktivierung der Leseeinrichtungen (3, 4, 5), welche der benötigten Zeit für das Auslesen einer Zugangsberechtigung oder einer ID durch die langsamste Leseeinrichtung (3, 4, 5) plus einem applizierbaren Offset entspricht, keine weiteren IDs oder Zugangsberechtigungen als gültig erkannt werden, der Zugang verweigert wird.

## Beschreibung

Die vorliegende Erfindung bezieht sich auf ein Verfahren zum Auslesen von Zugangsberechtigungen oder von IDs aus zumindest einem Kundenmedium mittels zumindest einer Leseeinrichtung einer Zugangskontrollvorrichtung und zur Auswertung der ausgelesenen IDs oder Zugangsberechtigungen, gemäß dem Oberbegriff des Patentanspruchs 1. Insbesondere bezieht sich die Erfindung auf ein Verfahren zum Auslesen von Zugangsberechtigungen oder von IDs aus zumindest einem Kundenmedium mittels zumindest einer Leseeinrichtung einer Zugangskontrollvorrichtung und zur Auswertung der ausgelesenen IDs oder Zugangsberechtigungen für den Fall, dass auf einem Kundenmedium mehrere IDs bzw. Zugangsberechtigungen ggf. mit unterschiedlichen Standards abgelegt sind und auch für den Fall, dass eine Zugangskontrollvorrichtung mehrere Leseeinrichtungen für unterschiedliche Arten von Kundenmedien aufweist.

Aus dem Stand der Technik ist bekannt, zur Zugangskontrolle Kundenmedien zu verwenden, auf denen Zugangsberechtigungen oder IDs abgelegt sind oder die Zugangsberechtigungen oder IDs enthalten, wobei den IDs Zugangsberechtigungen zugeordnet sind. Nach dem Auslesen einer ID aus einem Kundenmedium wird ausgewertet, ob in einem Server des Zugangskontrollsystems der ID eine gültige Zugangsberechtigung zugeordnet ist, um den Zugang zu gewähren oder zu verweigern.

Wenn eine Zugangskontrollvorrichtung Leseeinrichtungen für unterschiedliche Arten von Kundenmedien und unterschiedliche Standards aufweist, werden nach dem Stand der Technik alle Leseeinrichtungen aktiviert, wobei wenn eine Leseeinrichtung eine ID oder eine Zugangsberechtigung erfasst, die anderen Leseeinrichtungen deaktiviert werden und die erfasste ID oder Zugangsberechtigung zur Auswertung an einen Server des Zugangskontrollsystems übermittelt wird. Im Fall einer gültigen Zugangsberechtigung wird der Zugang gewährt; wenn keine gültige Zugangsberechtigung vorliegt, wird der Zugang verweigert und es werden alle Leseeinrichtungen aktiviert, um erneut IDs oder Zugangsberechtigungen zu erfassen.

Bei Kundenmedien, die RFID nach den Standards ISO 14443 und ISO 15693 unterstützen, wird nach dem Stand derTechnik das Kundenmedium mittels einer RFID Leseeinrichtung, die beide Standards unterstützt, lediglich nach dem ISO 15693 Standard ausgelesen. Wenn auf dem Kundenmedium eine ID, der eine gültige Zugangsberechtigung zugeordnet ist, nach einem anderen Standard abgelegt ist, wird sie demnach nicht ausgelesen. Wenn ein Kundenmedium mehrere Standards unterstützt, beispielsweise RFID und Barcode, wird aufgrund der Unterschiedlichkeit der Auslesegeschwindigkeiten zuerst nach dem RFID Standard ausgelesen, so dass, wenn keine gültige ID oder Zugangsberechtigung existiert, der Zugang verweigert wird, obwohl eine gültige Barcode-ID abgelegt sein kann, was bei den Benutzern für Verwirrung sorgt. Demnach dauert die Auswertung der Zugangsberechtigungen in nachteiliger Weise sehr lang.

Der vorliegenden Erfindung liegt die Aufgabe zugrunde, ein Verfahren zum Auslesen von Zugangsberechtigungen oder von IDs aus zumindest einem Kundenmedium mittels zumindest einer Leseeinrichtung einer Zugangskontrollvorrichtung und zur Auswertung der ausgelesenen IDs oder Zugangsberechtigungen anzugeben, durch dessen Durchführung die erwähnten Nachteile des Standes der Technik vermieden werden.

Diese Aufgabe wird durch die Merkmale des Patentanspruchs 1 gelöst. Weitere Ausgestaltungen und Vorteile gehen aus den Unteransprüchen hervor.

Demnach wird ein Verfahren zum Auslesen von Zugangsberechtigungen oder von IDs aus zumindest einem Kundenmedium mittels zumindest einer Leseeinrichtung einer Zugangskontrollvorrichtung und zur Auswertung der ausgelesenen IDs oder Zugangsberechtigungen vorgeschlagen, im Rahmen dessen sämtliche Leseeinrichtungen aktiviert werden und parallel einen Scan für IDs oder Zugangsberechtigungen durchführen, die in zumindest einem Kundenmedium enthalten oder auf diesem abgelegt sein können, wobei die ausgelesenen IDs oder Zugangsberechtigungen an eine Steuerung der Zugangskontrollvorrichtung übermittelt werden, welche die in der Zugangskontrollvorrichtung temporär speichert und in vorgegebenen Abständen an eine Auswerteeinheit übermittelt oder sofort nach dem Auslesen an die Auswerteeinheit übermittelt, während die Leseeinrichtungen weiterhin nach möglichen IDs oder Zugangsberechtigungen scannen, wobei, wenn eine Auswertung in der Auswerteeinheit ergibt, dass eine ausgelesene Zugangsberechtigung gültig ist oder einer ausgelesenen ID eine gültige Zugangsberechtigung zugeordnet ist, die Leseeinrichtungen deaktiviert werden und der Zugang durch Betätigung eines Sperrorgans der Zugangskontrollvorrichtung im Öffnungssinne gewährt wird und wobei, wenn nach einer vorgegebenen Zeit seit der Aktivierung der Leseeinrichtungen, welche der benötigten Zeit für das Auslesen einer Zugangsberechtigung oder einer ID durch die langsamste Leseeinrichtung plus einem Offset entspricht, keine weiteren IDs oder Zugangsberechtigungen ausgelesen, an die Auswerteeinheit übermittelt werden und als gültig erkannt werden, der Zugang verweigert wird.

Kundemedien im Sinne der Erfindung sind sämtliche Medien, die geeignet sind, eine Zugangsberechtigung oder eine ID zu speichern oder zu enthalten, die von einer Leseeinrichtung ausgelesen bzw. erfasst werden kann. Beispielsweise ist ein Nummernschild ein Kundenmedium im Sinne der Erfindung, wobei das Kennzeichen als ID dient, die von einer als Leseeinrichtung dienenden Kamera mit entsprechender Software erfassbar ist. Ferner können biometrische Merkmale als Kundenmedien dienen, die von einer geeigneten Leseeinrichtung, beispielsweise von einem Fingerabdruck- oder Irisscanner oder von einer Kamera mit Gesichtserkennungssoftware erfassbar sind. Weitere Kundenmedien können RFID-Tags, portable elektronische Geräte mit RFID-, Bluetooth-, Bluetooth Low Energy-, WLAN- oder UWB-Funktionalität, Barcodes, Magnetkarten oder akustische Signaturen sein. Die Auswerteeinheit kann in der Zugangskontrollvorrichtung oder in einem mit der Zugangskontrollvorrichtung zu Zweck der Datenkommunikation verbundenen Server angeordnet sein. Die Zugangskontrollvorrichtungen können Zugangskontrollvorrichtungen für Fahrzeuge oder Personen sein.

Wenn ein Kundenmedium von einer Leseeinrichtung nach unterschiedlichen Standards auslesbar ist, was beispielsweise bei RFID Leseeinrichtungen der Fall ist, welche die ISO 14443 und ISO 15693 RFID Standards unterstützen, wird das Kundenmedium von der Leseeinrichtung sequentiell nach den unterschiedlichen Standards ausgelesen, wobei die nach dem jeweiligen Standard ausgelesenen Zugangsberechtigungen oder IDs temporär gespeichert, und während das Kundenmedium nach weiteren Standards ausgelesen wird, an die Auswerteeinheit übermittelt werden, wobei dieser Vorgang solange wiederholt wird, bis entweder eine erfolgreiche Prüfung der bisher gelesenen IDs oder Zugangsberechtigungen erfolgt oder aber keine weiteren IDs oder Zugangsberechtigungen detektiert werden.

Wenn eine ausgelesene Zugangsberechtigung gültig ist oder einer ausgelesenen ID eine gültige Zugangsberechtigung zugeordnet ist, wird der Zugang gewährt.

Im Rahmen einer Weiterbildung ist vorgesehen, dass wenn keine ausgelesene Zugangsberechtigung gültig ist oder keiner ausgelesenen ID eine gültige Zugangsberechtigung zugeordnet ist oder wenn keine Zugangsberechtigung oder ID ausgelesen worden ist, von der Steuerung abgefragt wird, ob ein weiteres Kundenmedium vorliegt, wobei wenn kein weiteres Kundenmedium vorliegt, der Zugang verweigert wird und wobei, wenn ein weiteres Kundenmedium vorliegt, erneut ein sequentielles Auslesen des Kundenmediums nach den unterschiedlichen Standards durchgeführt wird, wobei die nach dem jeweiligen Standard ausgelesenen Zugangsberechtigungen oder IDs temporär gespeichert, und während das Kundenmedium nach weiteren Standards ausgelesen wird, an die Auswerteeinheit übermittelt werden, wobei dieser Vorgang solange wiederholt wird, bis entweder eine erfolgreiche Prüfung der bisher gelesenen IDs oder Zugangsberechtigungen erfolgt oder aber keine weiteren IDs oder Zugangsberechtigungen detektiert werden, wobei, wenn eine ausgelesene Zugangsberechtigung gültig ist oder einer ausgelesenen ID eine gültige Zugangsberechtigung zugeordnet ist, der Zugang gewährt wird und wobei, wenn keine ausgelesene Zugangsberechtigung gültig ist oder keiner ausgelesenen ID eine gültige Zugangsberechtigung zugeordnet ist oder wenn keine Zugangsberechtigung oder ID ausgelesen worden ist, der Zugang verweigert wird.

Durch die erfindungsgemäße Konzeption wird das zumindest eine Kundenmedium von mehreren Leseeinrichtungen parallel ausgelesen, so dass die Auswertegeschwindigkeit erhöht wird. Dadurch, dass bei Leseeinrichtungen, die mehrere Standards unterstützen, das zumindest eine Kundenmedium sequentiell nach sämtlichen unterstützten Standards ausgelesen wird, und bereits ausgelesene Zugangsberechtigungen oder IDs ausgewertet werden, während das Kundenmedium nach weiteren Standards ausgelesen wird, wird zudem gewährleistet, dass wenn eine gültige Zugangsberechtigung oder eine ID, der eine gültige Zugangsberechtigung zugeordnet ist, vorliegt, diese während der Zugangskontrolle erfasst wird, wobei durch diese Parallelverarbeitung die Geschwindigkeit der Zugangskontrolle erhöht wird.

Die Erfindung wird im Folgenden anhand der beigefügten Figuren beispielhaft näher erläutert. Es zeigen:
Figur 1: ein Flussdiagramm zur Veranschaulichung des erfindungsgemäßen Verfahrens für den Fall, dass die Zugangskontrollvorrichtung eine Zugangskontrollvorrichtung für Fahrzeuge ist und als Leseeinrichtungen eine RFID-Leseeinrichtung, einen Barcode-Reader und eine Kamera zur Kennzeichenerkennung aufweist; und
Figur 2: ein Flussdiagramm zur Veranschaulichung des erfindungsgemäßen Verfahrens für den Fall, dass ein Kundenmedium von einer RFID-Leseeinrichtung nach unterschiedlichen Standards auslesbar ist.

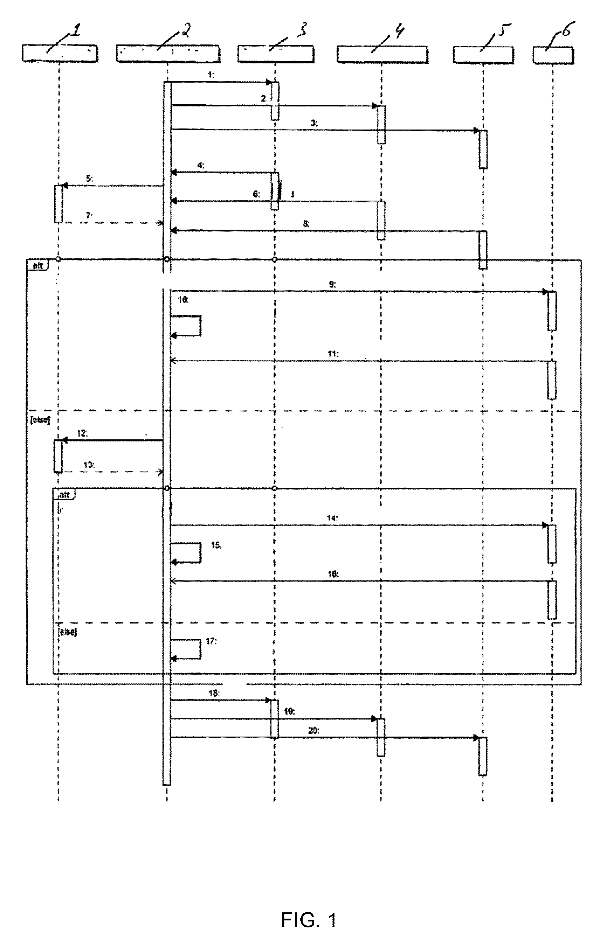

In Figur 1 ist mit 1 eine Auswerteeinheit bezeichnet, welche in einer Zugangskontrollvorrichtung 2 oder in einem mit der Zugangskontrollvorrichtung zu Zweck der Datenkommunikation verbundenen Server angeordnet sein kann. Die Zugangskontrollvorrichtung 2 weist drei Leseeinrichtungen auf, wobei eine erste Leseeinrichtung als Barcode-Reader 3, eine zweite Leseeinrichtung als Kamera 4 zur Kennzeichenerkennung und eine dritte Leseeinrichtung 5 als RFID-Leseeinrichtung ausgeführt sind. Die Zugangskontrollvorrichtung 2 weist ein vorzugsweise als Schrankenbaum ausgeführtes Sperrorgan 6 auf, welches bei einer gültigen Zugangsberechtigung im Öffnungssinne betätigt wird.

Zu Beginn des Verfahrens werden sämtliche Leseeinrichtungen 3, 4, 5 der Zugangskontrollvorrichtung 2 aktiviert (Schritte 1, 2, 3 zur Aktivierung des Barcode-Readers 3, der Kamera 4 und der RFID-Leseeinrichtung 5), und führen parallel einen Scan für IDs oder Zugangsberechtigungen durch, die in zumindest einem Kundenmedium enthalten oder auf diesem abgelegt sein können, wobei die ausgelesenen IDs oder Zugangsberechtigungen an eine Steuerung der Zugangskontrollvorrichtung 2 übermittelt werden (Schritte 4, 6, 8), welche diese an die Auswerteeinheit 1 zur Auswertung übermittelt (Schritt 5), während die Leseeinrichtungen 4, 5 weiterhin nach möglichen IDs oder Zugangsberechtigungen scannen. Bei dem gezeigten Beispiel hat als erste Leseeinrichtung der Barcode-Reader 3 eine ID ausgelesen, die von der Steuerung der Zugangskontrollvorrichtung 2 an die die Auswerteeinheit 1 übermittelt worden ist (Schritt 5), wobei das Ergebnis der Auswertung von der Auswerteeinheit 1 an die Steuerung übermittelt wird (Schritt 7).

Wenn die Auswertung in der Auswerteeinheit ergibt, dass der vom Barcode-Reader 3 ausgelesenen ID eine gültige Zugangsberechtigung zugeordnet ist, werden die Leseeinrichtungen 3, 4, 5 deaktiviert und es wird der Zugang gewährt, indem die Steuerung der Zugangskontrollvorrichtung 2 das Sperrorgan 6 im Öffnungssinne ansteuert, wobei wenn nach dem Passieren des Fahrzeugs das Sperrorgan 6 im Schließsinne betätigt wird, dies an die Steuerung der Zugangskontrollvorrichtung 2 übermittelt wird (Schritte 9, 10, 11).

Wenn die Auswertung in der Auswerteeinheit ergibt, dass der vom Barcode-Reader 3 ausgelesenen ID keine gültige Zugangsberechtigung zugeordnet ist, und die Leseeinrichtungen innerhalb einer vorgegebenen Zeit seit der Aktivierung der Leseeinrichtungen 3, 4, 5, welche der benötigten Zeit für das Auslesen einer Zugangsberechtigung oder einer ID durch die langsamste Leseeinrichtung plus einem vorgegebenen, applizierbaren Offset entspricht, IDs oder Zugangsberechtigungen ausgelesen haben, werden diese an die Auswerteeinheit 1 zur Auswertung übermittelt (Schritt 12), wobei das Ergebnis der Auswertung von der Auswerteeinheit 1 an die Steuerung übermittelt wird (Schritt 13). Ist das Ergebnis positiv, so wird der Zugang gewährt, indem die Steuerung der Zugangskontrollvorrichtung 2 das Sperrorgan 6 im Öffnungssinne ansteuert, wobei wenn nach dem Passieren des Fahrzeugs das Sperrorgan 6 im Schließsinne betätigt wird, dies an die Steuerung der Zugangskontrollvorrichtung 2 übermittelt wird (Schritte 14, 15, 16). Zugang im Sinne der Erfindung bedeutet dass eine Person oder ein Fahrzeug in Durchgangsrichtung der Zugangskontrollvorrichtung passieren kann.

Wenn nach einer vorgegebenen Zeit seit der Aktivierung der Leseeinrichtungen 3, 4, 5, welche der benötigten Zeit für das Auslesen einer Zugangsberechtigung oder einer ID durch die langsamste Leseeinrichtung plus einem vorgegebenen, applizierbaren Offset entspricht, keine weiteren IDs oder Zugangsberechtigungen ausgelesen, an die Auswerteeinheit übermittelt werden und als gültig erkannt werden, wird der Zugang verweigert (Schritt 17) und es werden sämtliche Leseeinrichtungen 3, 4, 5 aktiviert, um das nächste Fahrzeug oder im Falle einer Zugangskontrollvorrichtung für Personen die nächste Person auf eine gültige Zugangsberechtigung zu überprüfen (Schritte 18, 19, 20).

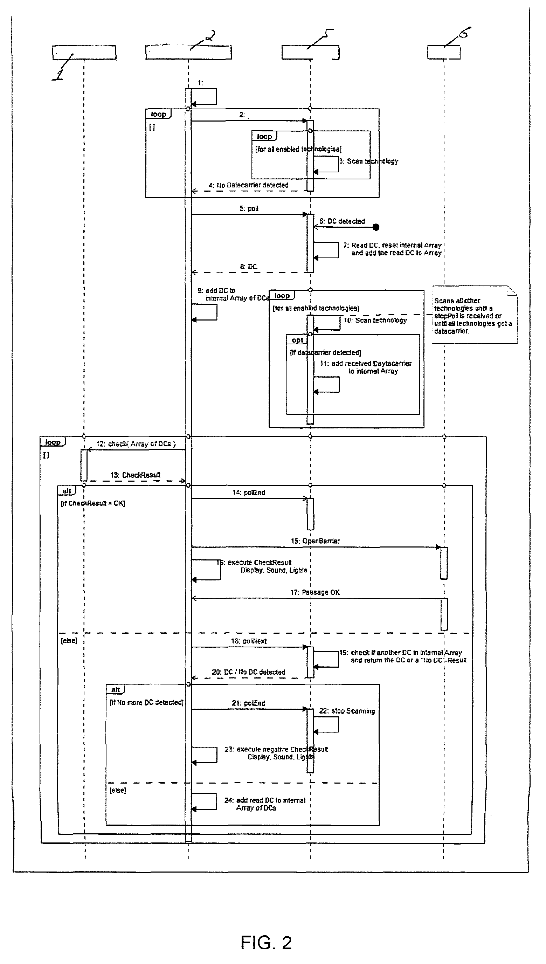

Für den Fall, dass ein Kundenmedium von einer Leseeinrichtung einer Zugangskontrollvorrichtung nach unterschiedlichen Standards auslesbar ist, was beispielsweise bei der RFID Leseeinrichtung 5 der Fall ist, welche die ISO 14443 und ISO 15693 RFID Standards unterstützt, wird gemäß einer Weiterbildung der Erfindung und bezugnehmend auf Figur 2 wie folgt vorgegangen:

Bei dem gezeigten Beispiel werden zu Beginn die Inhalte einer temporären Datei in der Zugangskontrollvorrichtung 2, enthaltend IDs oder Zugangsberechtigungen gelöscht (Schritt 1). Im Rahmen des Verfahrens wird ein Kundenmedium (DC, Datacarrier) von der Leseeinrichtung 5 sequentiell nach den unterschiedlichen Standards durchsucht (Schritte 2-8). Sobald eine ID erkannt wird (Schritt 6), wird eine temporäre Datei in der Leseeinrichtung 5 gelöscht und die gelesene Zugangsberechtigung oder ID gespeichert (Schritt 7) und an die Zugangskontrollvorrichtung 2 weitergeleitet, wobei diese Zugangsberechtigung oder ID auch temporär in der temporären Datei in der Zugangskontrollvorrichtung 2 gespeichert werden kann (Schritt 9). Während das Kundenmedium von der Leseeinrichtung 5 nach weiteren Standards ausgelesen wird (Schritte 10, 11) und weitere ausgelesene Zugangsberechtigungen oder IDs temporär in der temporären Datei in der Leseeinrichtung 5 oder in der temporären Datei in der Zugangskontrollvorrichtung 2 gespeichert werden, wird parallel dazu die erste ausgelesene ID oder Zugangsberechtigung an die Auswerteeinheit 1 zur Auswertung übermittelt (Schritt 12), wobei die Ergebnisse der Auswertung von der Auswerteeinheit 1 an die Steuerung übermittelt werden (Schritt 13). Wenn nach einem weiteren Standard Zugangsberechtigungen oder IDs ausgelesen werden, werden diese analog zur beschriebenen Vorgehensweise nach dem Speichern in einer temporären Datei an die Auswerteeinheit 1 zur Auswertung übermittelt.

Die Schritte des sequentiellen Auslesens nach den unterschiedlichen unterstützten Standards, des temporären Speicherns der ausgelesenen Zugangsberechtigungen oder IDs und des Übermitteins der ausgelesenen Zugangsberechtigungen oder IDs an die Auswerteeinheit, während das Kundenmedium nach weiteren Standards ausgelesen wird wobei dieser Vorgang solange wiederholt wird , bis entweder eine erfolgreiche Prüfung der bisher gelesenen IDs oder Zugangsberechtigungen erfolgt oder aber keine weiteren IDs oder Zugangsberechtigungen detektiert werden, können in das anhand Figur 1 beschriebene Verfahren integriert werden, wenn eine oder mehrere Leseeinrichtungen mehrere Standards unterstützen.

Wenn eine ausgelesene Zugangsberechtigung gültig ist oder einer ausgelesenen ID eine gültige Zugangsberechtigung zugeordnet ist, wird die Leseeinrichtung 5 deaktiviert (Schritt 14), wobei die Steuerung der Zugangskontrollvorrichtung 2 das Sperrorgan 6 im Öffnungssinne ansteuert, wobei nach dem Passieren des Fahrzeugs oder der Person das Sperrorgan 6 im Schließsinne betätigt wird und dies an die Steuerung der Zugangskontrollvorrichtung 2 übermittelt wird (Schritte 15, 16, 17). Hierbei kann während der Ansteuerung des Sperrorgans 6 im Öffnungssinne ein optisches und/oder akustisches Signal generiert werden.

Optional kann vorgesehen sein, dass, wenn keine ausgelesene Zugangsberechtigung gültig ist oder keiner ausgelesenen ID eine gültige Zugangsberechtigung zugeordnet ist oder wenn keine Zugangsberechtigung oder ID ausgelesen worden ist, von der Steuerung abgefragt wird, ob ein weiteres Kundenmedium vorliegt (Schritte 18, 19, 20), wobei wenn kein weiteres Kundenmedium vorliegt, die Leseeinrichtung deaktiviert und der Zugang verweigert wird (Schritte 21, 22, 23) und wobei, wenn ein weiteres Kundenmedium vorliegt, wie bereits für den Fall des ersten Kundenmediums beschrieben ein sequentielles Auslesen des Kundenmediums nach den unterschiedlichen Standard durchgeführt wird, wobei die nach dem jeweiligen Standard ausgelesenen Zugangsberechtigungen oder IDs temporär gespeichert werden (Schritt 24). Analog zur bereits beschriebenen Vorgehensweise werden die ausgelesenen Zugangsberechtigungen oder IDs an die Auswerteeinheit übermittelt, während das Kundenmedium nach weiteren Standards ausgelesen wird, wobei, wenn eine ausgelesene Zugangsberechtigung gültig ist oder einer ausgelesenen ID eine gültige Zugangsberechtigung zugeordnet ist, der Zugang gewährt wird und wobei, wenn keine ausgelesene Zugangsberechtigung gültig ist oder keiner ausgelesenen ID eine gültige Zugangsberechtigung zugeordnet ist oder wenn keine Zugangsberechtigung oder ID ausgelesen worden ist, der Zugang verweigert wird (Schritte 21, 22, 23). Das Verweigern des Zugangs kann optional durch ein optisches und/oder akustisches Signal signalisiert werden.

## Patentansprüche

1. Verfahren zum Auslesen von Zugangsberechtigungen oder von IDs aus zumindest einem Kundenmedium mittels zumindest einer Leseeinrichtung (3, 4, 5) einer Zugangskontrollvorrichtung (2) und zur Auswertung der ausgelesenen IDs oder Zugangsberechtigungen, **dadurch gekennzeichnet, dass** sämtliche Leseeinrichtungen (3, 4, 5) aktiviert werden und parallel einen Scan für IDs oder Zugangsberechtigungen durchführen, die in zumindest einem Kundenmedium enthalten oder auf diesem abgelegt sein können, wobei die ausgelesenen IDs oder Zugangsberechtigungen an eine Steuerung der Zugangskontrollvorrichtung (2) übermittelt werden, welche diese in der Zugangskontrollvorrichtung (2) temporär speichert und in vorgegebenen Abständen an eine Auswerteeinheit (1) übermittelt oder sofort nach dem Auslesen an die Auswerteeinheit (1) übermittelt, während die Leseeinrichtungen (3, 4, 5) weiterhin nach möglichen IDs oder Zugangsberechtigungen scannen, wobei, wenn eine Auswertung in der Auswerteeinheit (1) ergibt, dass eine ausgelesene Zugangsberechtigung gültig ist oder einer ausgelesenen ID eine gültige Zugangsberechtigung zugeordnet ist, die Leseeinrichtungen (3, 4, 5) deaktiviert werden und der Zugang durch Betätigung eines Sperrorgans (6) der Zugangskontrollvorrichtung im Öffnungssinne gewährt wird und wobei, wenn nach einer vorgegebenen Zeit seit der Aktivierung der Leseeinrichtungen (3, 4, 5), welche der benötigten Zeit für das Auslesen einer Zugangsberechtigung oder einer ID durch die langsamste Leseeinrichtung (3, 4, 5) plus einem applizierbaren Offset entspricht, keine weiteren IDs oder Zugangsberechtigungen ausgelesen, an die Auswerteeinheit (1) übermittelt und als gültig erkannt werden, der Zugang verweigert wird.

2. Verfahren nach Anspruch 1, **dadurch gekennzeichnet, dass** wenn ein Kundenmedium von einer Leseeinrichtung (5) nach unterschiedlichen Standards auslesbar ist, das Kundenmedium von der Leseeinrichtung (5) sequentiell nach den unterschiedlichen Standards ausgelesen wird, wobei die nach dem jeweiligen Standard ausgelesenen Zugangsberechtigungen oder IDs temporär gespeichert, und während das Kundenmedium nach weiteren Standards ausgelesen wird, an die Auswerteeinheit (1) übermittelt werden, wobei dieser Vorgang solange wiederholt wird, bis entweder eine erfolgreiche Prüfung der bisher gelesenen IDs oder Zugangsberechtigungen erfolgt oder aber keine weiteren IDs oder Zugangsberechtigungen detektiert werden.

3. Verfahren nach Anspruch 1 oder 2, **dadurch gekennzeichnet, dass** Kundemedien Medien sind, die geeignet sind, eine Zugangsberechtigung oder eine ID zu speichern oder zu enthalten, die von einer Leseeinrichtung (5) ausgelesen bzw. erfasst werden kann.

4. Verfahren nach Anspruch 1, 2 oder 3, **dadurch gekennzeichnet, dass** als Kundenmedien Nummernschildervon Fahrzeugen, biometrische Merkmale, RFID-Tags, portable elektronische Geräte mit RFID-, Bluetooth-, Bluetooth Low Energy-, WLAN- oder UWB-Funktionalität, Barcodes, Magnetkarten oder akustische Signaturen verwendet werden.

## Geänderte Patentansprüche

### Geänderte Patentansprüche gemäss Regel 137(2) EPÜ.

1. Verfahren zum Auslesen von Zugangsberechtigungen oder von IDs aus zumindest einem Kundenmedium mittels zumindest zwei Leseeinrichtungen (3, 4, 5) einer Zugangskontrollvorrichtung (2) und zur Auswertung der ausgelesenen IDs oder Zugangsberechtigungen, **dadurch gekennzeichnet, dass** sämtliche Leseeinrichtungen (3, 4, 5) aktiviert werden und parallel einen Scan für IDs oder Zugangsberechtigungen durchführen, die in zumindest einem Kundenmedium enthalten oder auf diesem abgelegt sein können, wobei die ausgelesenen IDs oder Zugangsberechtigungen an eine Steuerung der Zugangskontrollvorrichtung (2) übermittelt werden, welche diese in der Zugangskontrollvorrichtung (2) temporär speichert und in vorgegebenen Abständen an eine Auswerteeinheit (1) übermittelt oder sofort nach dem Auslesen an die Auswerteeinheit (1) übermittelt, während die Leseeinrichtungen (3, 4, 5) weiterhin nach möglichen IDs oder Zugangsberechtigungen scannen, wobei, wenn eine Auswertung in der Auswerteeinheit (1) ergibt, dass eine ausgelesene Zugangsberechtigung gültig ist oder einer ausgelesenen ID eine gültige Zugangsberechtigung zugeordnet ist, die Leseeinrichtungen (3, 4, 5) deaktiviert werden und der Zugang durch Betätigung eines Sperrorgans (6) der Zugangskontrollvorrichtung im Öffnungssinne gewährt wird und wobei, wenn nach einer vorgegebenen Zeit seit der Aktivierung der Leseeinrichtungen (3, 4, 5), welche der benötigten Zeit für das Auslesen einer Zugangsberechtigung oder einer ID durch die langsamste Leseeinrichtung (3, 4, 5) plus einem applizierbaren Offset entspricht, keine weiteren IDs oder Zugangsberechtigungen ausgelesen, an die Auswerteeinheit (1) übermittelt und als gültig erkannt werden, der Zugang verweigert wird.

2. Verfahren nach Anspruch 1, **dadurch gekennzeichnet, dass** wenn ein Kundenmedium von einer der zumindest zwei Leseeinrichtungen (5) nach unterschiedlichen Standards auslesbar ist, das Kundenmedium von der Leseeinrichtung (5) sequentiell nach den unterschiedlichen Standards ausgelesen wird, wobei die nach dem jeweiligen Standard ausgelesenen Zugangsberechtigungen oder IDs temporär gespeichert, und während das Kundenmedium nach weiteren Standards ausgelesen wird, an die Auswerteeinheit(1) übermittelt werden, wobei dieser Vorgang solange wiederholt wird , bis entweder eine erfolgreiche Prüfung der bisher gelesenen IDs oder Zugangsberechtigungen erfolgt oder aber keine weiteren IDs oder Zugangsberechtigungen detektiert werden.

3. Verfahren nach Anspruch 1 oder 2, **dadurch gekennzeichnet, dass** als Kundenmedien Nummernschilder von Fahrzeugen, biometrische Merkmale, RFID-Tags, portable elektronische Geräte mit RFID-, Bluetooth-, Bluetooth Low Energy-, WLAN- oder UWB-Funktionalität, Barcodes, Magnetkarten oder akustische Signaturen verwendet werden.
